# EUROPEAN PATENT APPLICATION

(11) **EP 4 301 021 A1**
(43) Date of publication of application: **03.01.2024**
(21) Application number: 22305968.4
(22) Date of filing: 30.06.2022
(51) Int. Cl.: H04W 12/30, H04W 8/20

(54) **A METHOD FOR INFORMING A MOBILE NETWORK OPERATOR SERVER WHICH PROFILE OF A PROFILE TYPE SHOULD BE DOWNLOADED FROM A SM-DP+ TO A SECURE ELEMENT**

(71) Applicant: THALES DIS FRANCE SAS, 92190 Meudon (FR)
(72) Inventor: PERTICARA, Francois, 13720 La Bouilladisse (FR); GARCIN, Florent, 13170 Les Pennes Mirabeau (FR); PICO, Richard, 13080 Luynes (FR); VALLES, Gregory, 13011 Marseille (FR)
(74) Representative: Scheer, Luc

(57) **Abstract**

The invention concerns a method for informing a mobile network operator (21) server which profile should be downloaded from a SM-DP+ (22) to a secure element cooperating with a device (23), the SM-DP+ (22) storing profiles classified in three categories:
- Preferred profile type, a profile type that has been successfully downloaded in a previous secure element;
- Authorized profile type, a profile type that is authorized to be downloaded to the secure element by the MNO providing the profile type to the SM-DP+ (22);
-Forbidden profile type, a profile type that is forbidden to be downloaded to the secure element by the MNO providing the profile to the SM-DP+ (22),
the method comprising:
- generating and sharing between the mobile network operator server (21) and the SM-DP+ (22) an EligibilityId and transmitting the Eligibilityld from the device (23) to the SM-DP+ (22) along with information on the secure element and the device (23);
- transmitting from the SM-DP+ (22) to the mobile network operator (21) server the information on the profile to be downloaded in the secure element, based on the Eligibilityld and the information on the secure element and the device (23).

## Description

The present invention concerns telecommunications and more precisely the download of a mobile network operator (MNO) profile in a secure element cooperating with a device.

The secure element can be a Sim card, an UICC, an embedded UICC (eUICC) or an integrated UICC (iUICC) for example.

The device can be a mobile phone, a smartphone, a PDA, a M2M or an loT device for example. It is known that profiles (including subscriptions, keys, files, applets, elementary files,...) can be downloaded in secure elements in the field thanks to a SM-DP+, as defined by the GSMA specifications. SM-DP stands for Subscription Manager Data Preparation.

More precisely, in the eUICC domain, a profile is downloaded from a server SM-DP+ (Solution server to manage the eSIM download remotely) to the eUICC through a device in which the eUICC is embedded.

Hereafter we describe the procedure defined by the SGP.22 from the GSMA.

When the user signs a contract or picks up a prepaid subscription, the profile attached to this contract is downloaded from a server on the network. This server is the SM-DP+. The SM-DP+ is contacted by the LPA application (Local Profile Assistant) to start a profile download. Later in the process the SM-DP+ is directly contacted by the eUICC with the help of the LPA (through an encrypted data channel) to download a new profile.

The SM-DP+ also communicates with the provisioning system of the network operator, e.g. in the following scenario: The user buys a prepaid subscription (online or in a store). The network operator then links the contract to a profile that the network operator knows that it already exists on the SM-DP+. The network operator then gives a MachingID to profile and informs the SM-DP+ that a particular MatchingID has been assigned to a particular profile. The MatchingID is then also given to the user as part of the 2D barcode or QR code which is scanned by the LPA application. The MachingID is then sent by the LPA to the SM-DP+ when the user wants to download the profile so the SM-DP+ can find the profile which the network operator's provisioning system has assigned to the user.

As the download of a profile requires user interaction, the LPA is an application on the device that lets the user manage his virtual SIM cards (profiles). Management operations are downloading new profiles, activating and deactivating them and also deleting them from the eUICC. The application that interacts with the user and communicates with the eUICC and the server in the network is this LPA. In theory, the LPA can reside in the eUICC or in the device that interacts with the user.

The profiles are provided by MNOs and comprises profile components. These profile components are:
- A MNO SD (Security Domain);
- Supplementary Security Domains (SSD) and a CASD (Controlling Authority Security Domain);
- Applets ;
- Applications, e.g. NFC applications ;
- a NAAs (Network Attachment Subsystem);
- Other elements of the File System;
- Profile Metadata, including Profile Policy Rule.

The devices are provided by device makers (OEM).

A MNO books a profile for the end user but the MNO does not know the real device used by the end-user.

The MNO must book a profile to the SM-DP+ to deliver a profile behind a subscription plan to the end user.

Today with the specification provided by the GSMA, the MNO prior the download does not know the device and there is a risk that the profile booked to the SM-DP+ is not compliant with the device.

Annex F of the GSMA specification SGP.22 - RSP Technical Specification entitled "Profile Eligibility Check (Informative)" V2.x describes two types of checking:
- Static Eligibilty Check (SEC): If the MNO does not know the device (its IMEI) and eUICC (its EID) and their capabilities, the eligibility is not possible.
- Dynamic Eligibiliy Check (DEC): The check is based on eUICC Info and Device Capabilities signed by the eUICC during "Download & Installation procedure". So the "compatible or not" profile is already booked and used.

In this case, the end user will receive an error message, and the MNO must book an error profile to the SM-DP+, with potentially the same risk.

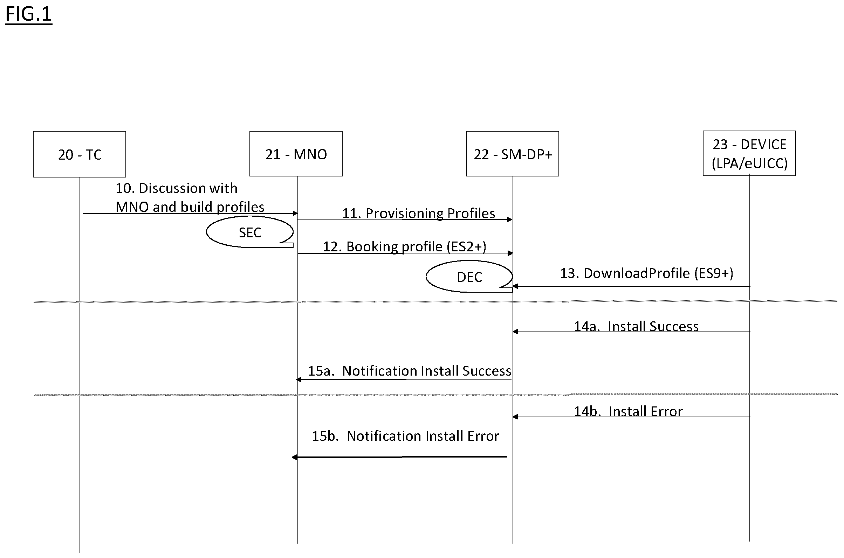

Figure 1 represents exchanges between a MNO server 21, for example an OTA server, a SM-DP+ 22 and a device 23 comprising a LPA and an eUICC.

In this figure, a Technical Consultant (TC 20) is also represented.

The TC 20, at step 10, after having discussed with the MNO 21 about its needs, builds profiles that are prepared by the MNO in his server 21.

At step 11, the MNO 21 server provisions these profiles in the SM-DP+ 22.

In the SEC scenario, at step 12, the MNO server 21 books profiles through an ES2+ interface in the SM-DP+ 22.

The ES2+ interface connects the SM-DP+ 22 with the MNO server 21. Standardization of this interface is necessary because the SM-DP+ server 22 can be operated by different entities. For example, a MNO could buy and operate his own SM-DP+ server, or he could outsource SM-DP+ operation and the creation of profiles to an external entity.

In the DEC scenario, through an ES9+ interface, at step 13, the LPA establishes an encrypted connection to the SM-DP+ 22, e.g. when the user wants to download a new profile (virtual SIM). Two solutions are then possible after installation of the profile in the eUICC:
- If the installation is successful, the device 23 informs the SM-DP+ 22 at step 14a of this success. The SM-DP+ 22 at step 15a notifies the MNO server 21 of the installation success;
- If the installation is not successful, the device 23 informs the SM-DP+ 22 at step 14b of this failure. The SM-DP+ 22 at step 15b notifies the MNO server 21 of the installation failure.

Step 13 consists in fact in four successive requests from the eUICC to the SM-DP+ 22:
The first request is a function called "InitiateAuthentication".

This function requests the SM-DP+ 22 authentication. This is following the "GetEUICCChallenge" between the eUICC and the LPA, where the LPA retrieves material from the eUICC to be provided to the SM-DP+ 22. On reception of this function call, the SM-DP+ 22 shall:
- Verify that it supports the Specification Version Number indicated by the eUICC.
- Check if the received address matches its own SM-DP+ 22 address.
- Check if it can use one of the GSMA CI Public Keys against which eUICC signatures can be verified, and select the CI.
- Verify that it can provide a CERT.DPauth.ECDSA signed by one of the GSMA CI Public Keys supported by the eUICC and select a CERT.DPauth.ECDSA preferably according to the priority provided by the eUICC for the CI Public Keys. If any of these verifications fail, the SM-DP+ 22 shall return a 'Function execution status' indicating 'Failed' with the relevant status code. Otherwise the SM-DP+ 22 will:
   ∘ Generate a TransactionID that is used to uniquely identify the ongoing RSP session.
   ∘ Generate a ServerChallenge for eUICC authentication attached with the ongoing RSP session.
   ∘ Generate a serverSigned1 data object as expected by the eUICC.
   ∘ Generate a signature (serverSignature1).

The second request is a function called "AuthenticateClient".

This function is called by the LPA to request the authentication of the eUICC by the SM-DP+ 22. This function is correlated to a previous normal execution of an "ES9+.InitiateAuthentication" function described above through a TransactionID generated and delivered by the SM-DP+. The TransactionID is an identifier for the current transaction (related to a given device). This TransactionID is incremented at each transaction for avoiding replay attacks. On reception of this function call, the SM-DP+ will:
- Verify the validity of the CERT.EUM.ECDSA, using the related public key PK.CI.ECDSA.
- Verify the validity of the CERT.EUICC.ECDSA, using the public key PK.EUM.ECDSA.
- Verify the eUICC signature (euiccSignature1) using the PK.EUICC.ECDSA.
- Verify that the TransactionID is known and relates to an ongoing RSP session.
- Verify that the ServerChallenge attached to the ongoing RSP session matches the ServerChallenge returned by the eUICC.

The third request is a function called "GetBoundProfilePackage".

This function has to be called to request the delivery and the binding of a Profile Package for the eUICC. This function is correlated to a previous normal execution of an "ES9+.AuthenticateClient" function through the TransactionID. On reception of this function call, the SM-DP+ 22 will:
- Verify that the received TransactionID is known and relates to an ongoing RSP session.
- Verify the eUICC signature (euiccSignature2) using the PK.EUICC.ECDSA attached to the ongoing RSP session.
- Verify if this order requires a Confirmation Code verification; if yes, the SM-DP+ 22 verifies that the received Hashed Confirmation Code matches the value known by the SM-DP+ 22.

The fourth and last function is called "HandleNotification".

This function is called by the LPA to notify the SM-DP+ 22 that a Profile Management Operation has successfully been performed on the eUICC. This corresponds to steps 14a and 14b.

The problem with these known solutions is that, as already said, with the specification provided by the GSMA, the MNO prior the download doesn't know the device and there is a risk that the profile booked to the SM-DP+ 22 is not compliant with the device.

The present invention proposes a solution to this problem.

More precisely, the invention proposes a method for informing a mobile network operator server which profile should be downloaded from a SM-DP+ to a secure element cooperating with a device, the SM-DP+ storing profiles classified in three categories:
- Preferred profile type, a profile type that has been successfully downloaded in a previous secure element;
- Authorized profile type, a profile type that is authorized to be downloaded to the secure element by the MNO providing the profile type to the SM-DP+;
- Forbidden profile type, a profile type that is forbidden to be downloaded to the secure element by the MNO providing the profile to the SM-DP+,
   the method comprising:
   - generating and sharing between the mobile network operator server and the SM-DP+ an Eligibilityld and transmitting the Eligibilityld from the device to the SM-DP+ along with information on the secure element and the device;
   - transmitting from the SM-DP+ to the mobile network operator server the information on the profile to be downloaded in the secure element, based on the Eligibilityld and the information on the secure element and the device.

Preferably, the information is comprised in a QR code scanned by the device. Advantageously, the secure element is a Sim card, a UICC, an eUICC or an iUICC.

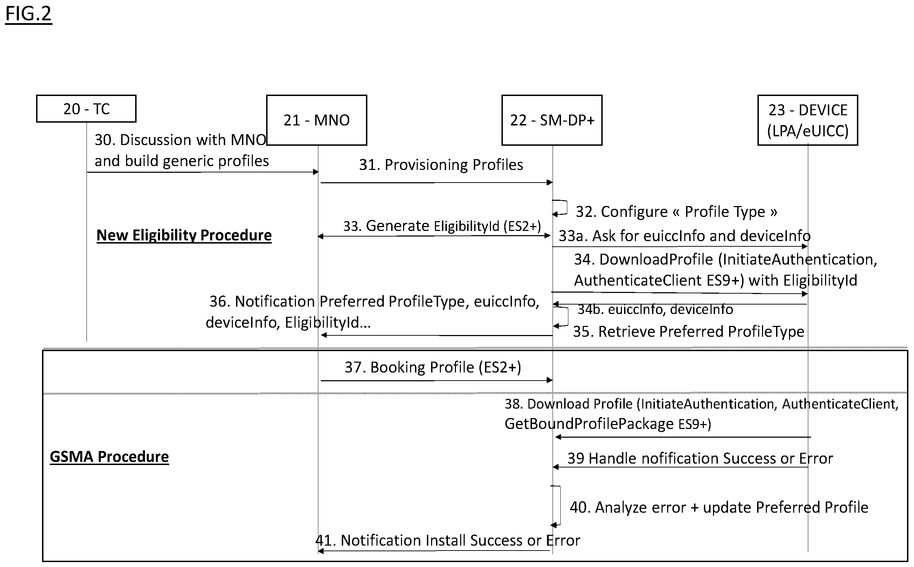

The invention will be better understood by reading the following description of figure 2 that represents a solution for solving the above mentioned problem.

For this solution, we need three states of profile types to define the available action of the SM-DP+ 22. These profiles types are the followings:
- Preferred ProfileType: A profile type that has been successfully downloaded in a previous secure element by the SM-DP+ 22, this previous secure element having the same or similar capabilities than the current secure element. Also, the previous device cooperating with this previous secure element has the same or similar capabilities than the device cooperating with the current secure element;
- Authorized ProfileType: A profile type is authorized by the operator to be used by the end user. A profile of an authorized ProfileType is thus a profile that is authorized to be downloaded to the secure element by the SM-DP+ 22;
- Forbidden ProfileType: A profile type that is not a suitable profile (a profile of this type has been downloaded on a secure element with failure).

The solution comprises an "Eligibility Procedure" before the "Download Initiation Procedure" from the GSMA specification (Annex F aforementioned). This solution is represented in the flowchart of figure 2.

At step 30, like at step 10 of figure 1, a TC 20 provides profiles to be compliant with the specification of the device makers (5G, OS,...).

At step 31, the MNO server 21 provisions several batch profiles (Profile Types) from the MNO in the SM-DP+ 22.

At step 32, an administrator of the SM-DP+ 22 configures the Profile Types (Preferred, Authorized or Forbidden). This means that the different profiles are classified in the three categories mentioned above. A profile type can thus become Preferred, Authorized or Forbidden. By default the profileType is Authorized.

Then begins the eligibility procedure according to the invention:
At step 33 and through ES2+, the MNO asks to the SM-DP+ 22 to generate an Eligibilityld. An Eligibilityld is for example a QR code and corresponds to a number. This number is different for each device 23 as long as the secure element has not be provisioned with a profile. The MNO 21 can also generate an Eligibilityld, based on the type of profile to be downloaded in the secure element (VIP, preferred list of PLMNs,...). The Eligibilityld can also be generated by the MNO 21 and sent to the SM-DP+ 22. The SM-DP+ 22 reserves an Eligibilityld as an activation code for the end user (or he uses a SM-DS). Eligibilityld is used for any kind of device (car, e-meter, smartphone,...). There is no need to know the device model and no need to select a specific profile, the Eligibilityld being just an identifier pairing the MNO server 21, the SM-DP+ 22 and the device 23.

The proposed solution is thus based on an "Eligibility Procedure" executed before the "Download Initiation Procedure" from the GSMA specification.

To manage this new eligibility procedure we must thus have a new QR code for the end user. This QR code will help the MNO to retrieve the information from device and eUICC (euicclnfo and devicelnfo, hereinafter "information") to select the "perfect" or "best" subscription for this device/eUICC. In this case the solution will guaranty in any case the success of the subscription download in the device/eUICC, at least after a first selection of a profile. The QR code can be printed on the box of the device 23 bought by the user or sent by the MNO server 21 to the user when he wants a subscription from this MNO. This ensures that the eUICC of the device 23 will be provisioned by a profile belonging to the MNO.

The QR code is scanned by the user before step 33a during which the SM-DP+ 22 asks to the device 23 the information euicclnfo and devicelnfo.
euicclnfo is for example the EID of the eUICC and device info comprises for example the model of the device 23, the installed OS,...

At step 34, the SM-DP+ 22 sends a message "DownloadProfile (ES9+.InitiateAuthentication, ES9+.AuthenticateClient) with Eligibilityld" to the device 23. So the two above-mentioned functions InitiateAuthentication and AuthenticateClient are sent to the device 23 in order to request namely its Eligibilityld.

At step 34b, the device (LPA) performs "download" actions with ES9+ (InitiateAuthentication and AuthenticateClient functions). Here the device 23 uses the scanned QR code to send the information eUICCInfo (informations on the eUICC) and devicelnfo (informations of the device like IMEI or TAC) signed by the eUICC.

At step 35, the SM-DP+ 22 retrieves which Profile Types are compatible with the device and the eUICC (regarding the information euicclnfo and devicelnfo) thanks to previous successful downloads.

If no Preferred Profile Type is available, the SM-DP+ 22 selects one of the Authorized Profile Types (but never a forbidden profile).

At step 36, the SM-DP+ 22 notifies the MNO server 21 with all necessary information to choose the best profile: The "Authorized", "Preferred" ProfileTypes for this device but also eUICCInfo, EID, Devicelnfo, IMEI and Eligibilityld. Now, the MNO 21 server knows the device model and can choose a specific profile adapted to the eUICC, and the MNO 21 server can activate this subscription in its backend. It is the MNO server 21 that decides which profile has to be downloaded, based on the data received at step 36 from the SM-DP+ 22.

Step 36 is the end of the Eligibility Procedure according to the invention.

At step 37 begins the known GSMA procedure, with ES2+, the MNO 21 books the profile from "Download Initiation Procedure" GSMA spec. The Eligibilityld could be used as MatchingID (as defined by the GSMA) to keep the same identifier for Eligibility Procedure and Download.

The MatchingID is a mandatory information (according to the GSMA) that shall be set-up between the MNO 21 and the SM-DP+ 22, to identify the context of a specific management order given to the SM-DP+ 22. The MatchingID is generated during the download initiation procedure of SGP.22.

In the state of the art, the MatchingID is comprised in a QR code printed on the box comprising the device sold to a client (or on a card given to the client). The MatchingID comprises an activation code and the URL address of the SM-DP+. So, the MatchingID reserves a profile to be downloaded in the eUICC of the device. When the user scans the QR code, a profile is downloaded in the eUICC but there is no guaranty that this profile matches with the eUICC or the device. If the profile does not match, the download fails and the user must request another profile (i.e. another QR code) from the MNO.

But here, at step 37, the order comprises the preferred profile type (MatchingID or EligibilityID) in order to download a profile that corresponds to the euicclnfo and devicelnfo. This profile is chosen by the MNO 21.

At step 38, the device/LPA performs "download" actions with ES9+ (InitiateAuthentication, AuthenticateClient, GetBoundProfilePackage).

At step 39, on receipt ES9+ HandleNotification, SM-DP+ server 22 performs (at step 40):
If the download has failed, the SM-DP+ 22 never proposes again this profile to this kind of device. Profile Type is now a Forbidden profile for this device type.

If the download is successful, Profile Type is now a Preferred Profile Type for this device Type (if not already done).

At step 41, after the successful download the SM-DP+ 22 sends a notification install success to the MNO server 21.

With this solution, the MNO server 21 knows the device model and profile type compatible with this device before launching the "Download Initiation procedure" from GSMA specification SGP.22.

With this solution, there is only one error per attempt: The first for a preferred profile type with a bad configuration. Once the SM-DP+ 22 has updated the profile type, all other subsequent downloads will be successful.

## Claims

1. A method for informing a mobile network operator (21) server which profile should be downloaded from a SM-DP+ (22) to a secure element cooperating with a device (23), said SM-DP+ (22) storing profiles classified in three categories:
- Preferred profile type, a profile type that has been successfully downloaded in a previous secure element;
- Authorized profile type, a profile type that is authorized to be downloaded to said secure element by the MNO providing said profile type to said SM-DP+ (22);
- Forbidden profile type, a profile type that is forbidden to be downloaded to said secure element by the MNO providing said profile to said SM-DP+ (22),
said method comprising:
- generating and sharing between said mobile network operator server (21) and said SM-DP+ (22) an Eligibilityld and transmitting said Eligibilityld from said device (23) to said SM-DP+ (22) along with information on said secure element and said device (23);
- transmitting from said SM-DP+ (22) to said mobile network operator (21) server said information on the profile to be downloaded in said secure element, based on said Eligibilityld and said information on said secure element and said device (23).

2. A method according to claim 1, wherein said information is comprised in a QR code scanned by said device (23).

3. A method according to any of the claims 1 and 2, wherein said secure element is a Sim card, a UICC, an eUICC or an iUICC.
